# EUROPEAN PATENT APPLICATION

(11) **EP 2 573 351 A1**
(43) Date of publication of application: **27.03.2013**
(21) Application number: 10851708.7
(22) Date of filing: 20.05.2010
(51) Int. Cl.: F01N 3/36, F01N 3/02

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: SHINODA, Masashi, Toyota-shi, Aichi 471-8571 (JP)
(74) Representative: Smith, Samuel Leonard
(86) International application number: PCT/JP2010/003392
(87) International publication number: WO 2011/145143

(57) **Abstract**

An internal combustion engine according to the present invention includes an exhaust treatment device provided in an exhaust passage and a burner device provided upstream of the exhaust treatment device to raise exhaust temperature. The burner device includes a fuel addition valve configured to add fuel into the exhaust passage, a first ignition device configured to ignite the added fuel, a burner catalyst provided downstream of the first ignition device, and a second ignition device provided downstream of the burner catalyst. The burner catalyst partitions the exhaust passage into an intra-catalyst passage formed inside the burner catalyst and an extra-catalyst passage formed outside the burner catalyst. The second ignition means is positioned between the extra-catalyst passage and the exhaust treatment device. Generated soot can be combusted by the second ignition device.

## Description

### Technical Field

The present invention relates to an internal combustion engine, and in particular, to an internal combustion engine with a burner device provided upstream of an exhaust treatment device in an exhaust passage to raise exhaust temperature.

### Background Art

In an exhaust passage of an internal combustion engine, a burner device may be provided upstream of an exhaust treatment device (catalyst or the like) so that heating gas generated by the burner device can be utilized to raise exhaust temperature to heat the exhaust treatment device, thus promoting warm-up of the exhaust treatment device. The burner device typically allows appropriate ignition means to ignite and combust fuel added into the exhaust passage. Furthermore, the burner device may include a burner catalyst located downstream of the ignition means to oxidize added fuel.

Patent Document 1 discloses that a small-sized oxidation catalyst and a fuel supply valve are arranged upstream of an exhaust purification catalyst so that when fuel is supplied to the small-sized oxidation catalyst via the fuel supply valve, part of the supplied fuel is allowed to flow into the exhaust purification catalyst through the side of the small oxidation catalyst.

In the burner device, for example, inappropriate mixture of added fuel and exhaust gas (particularly oxygen contained in the exhaust gas) may cause incomplete combustion or a misfire, resulting in a relatively large amount of soot. If no measures are taken against such soot, various problems may occur such as blockage of the exhaust treatment device, located downstream of the burner device.

Thus, an object of the present invention is to provide an internal combustion engine with a burner device that enables the amount of soot discharged to be suppressed.

### Citation List

### Patent Literature

PTL 1: Japanese Patent Laid-Open No. 2009-156164

### Summary of the Invention

An aspect of the present invention provides an internal combustion engine comprising an exhaust treatment device provided in an exhaust passage and a burner device provided upstream of the exhaust treatment device to raise exhaust temperature, the internal combustion engine being characterized in that:
the burner device includes a fuel addition valve configured to add fuel into the exhaust passage, first ignition means for igniting the fuel added through the fuel addition valve, a burner catalyst provided downstream of the first ignition means, and second ignition means provided downstream of the burner catalyst,
the burner catalyst is formed to occupy a part of a cross section of the exhaust passage, thus partitioning the exhaust passage into an intra-catalyst passage formed inside the burner catalyst and an extra-catalyst passage formed outside the burner catalyst, and
the second ignition means is positioned between the extra-catalyst passage and the exhaust treatment device in an axial direction of the exhaust passage.

According to this aspect, even if soot is generated by insufficient ignition by the first ignition means, exhaust gas containing the soot can be re-ignited and combusted by the second ignition means. Hence, the amount of soot discharged from the burner device can be suppressed.

Preferably, the second ignition means is positioned near an outlet of the extra-catalyst passage.

Preferably, the second ignition means is positioned inside an extended area obtained by extending the extra-catalyst passage downstream along the axial direction of the exhaust passage.

Preferably, the burner catalyst is formed to contact an inner circumferential surface of the exhaust passage and includes at least one through-hole penetrating the burner catalyst in the axial direction of the exhaust passage, and the through-hole forms the extra-catalyst passage.

Preferably, the at least one through-hole is formed in a central portion of the burner catalyst, and the burner device is thus annularly formed.

Preferably, a plurality of the through-holes are formed at respective predetermined positions of the burner catalyst.

Preferably, the burner catalyst is positioned at a distance from the inner circumferential surface of the exhaust passage, and the annular extra-catalyst passage is formed radially outside the burner catalyst.

Preferably, the internal combustion engine comprises acquisition means for acquiring a temperature of the exhaust processing device, and control means for controlling the fuel addition valve, the first ignition means, and the second ignition means based on the temperature acquired by the acquisition means, and the control means activates the fuel addition valve, the first ignition means, and the second ignition means when the acquired temperature is within a predetermined first temperature range, and activates the fuel addition valve and the second ignition means while inactivating the first ignition means when the acquired temperature is within a predetermined second temperature range higher than the first temperature range.

Preferably, the exhaust treatment device comprises an oxidation catalyst.

The present invention is very effective for suppressing the amount of soot discharged from the burner device.

### Brief Description of Drawings

[Fig. 1] Fig. 1 is a schematic side view of an internal combustion engine according to an embodiment of the present invention;
[Fig. 2] Fig. 2 is a vertically sectional side view showing a burner device;
[Fig. 3] Fig. 3 is a vertically sectional front view of the burner device as seen from an upstream side;
[Fig. 4] Fig. 4 is a time chart illustrating variation in the temperature of an oxidation catalyst and in engine rotation speed which variation is observed after cold start;
[Fig. 5] Fig. 5 is a flowchart for control of the burner device;
[Fig. 6] Fig. 6 is a vertically sectional side view of a first modification;
[Fig. 7] Fig. 7 is a vertically sectional front view of the first modification;
[Fig. 8] Fig. 8 is a vertically sectional side view of a second modification; and
[Fig. 9] Fig. 9 is a vertically sectional front view of the second modification.

### Description of Embodiments

Preferred embodiments of the present invention will be described below in detail. However, the embodiments of the present invention are not limited to those described below. It should be noted that the present invention includes any variations and applications embraced by the concepts of the present invention defined by the claims. The sizes, materials, shapes, relative arrangements, and the like of the components described in the embodiments are not intended to limit the technical scope of the present invention to those unless otherwise specified.

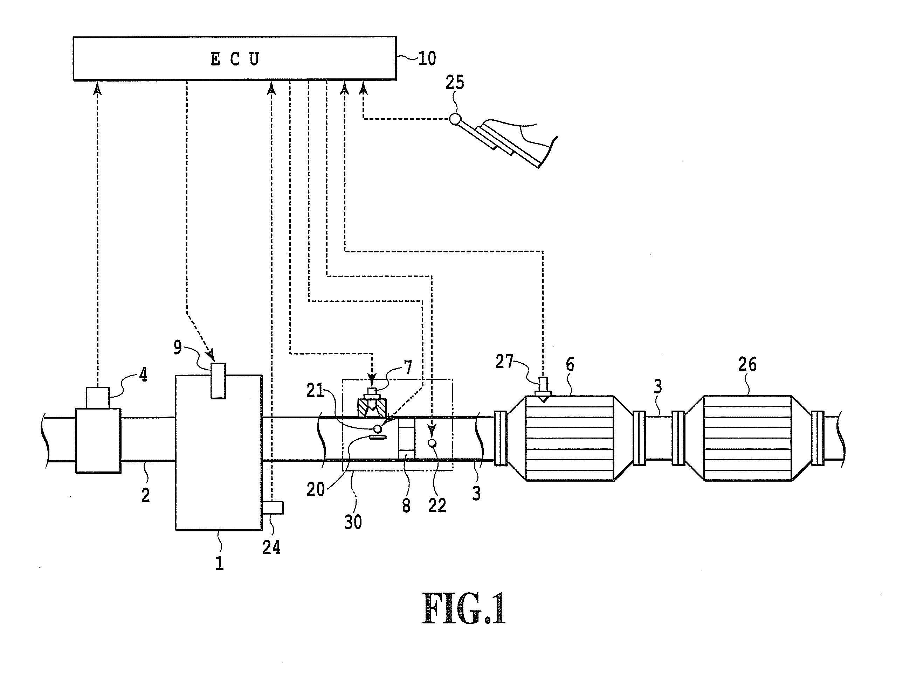

Fig. 1 schematically shows the configuration of an engine main body 1 and an intake and exhaust system according to an embodiment. The engine main body 1 forms a four-cylinder, four-cycle diesel engine mounted in a vehicle. An intake pipe 2 and an exhaust pipe 3 are connected to the engine main body 1. The intake pipe 2 and the exhaust pipe 3 define an intake passage and an exhaust passage, respectively. An air flow meter 4 is provided in the middle of the intake pipe 2 to output a signal corresponding to the flow rate of intake air flowing through the intake pipe 2. The air flow meter 4 detects the amount of intake air flowing into the engine main body 1 per unit time (that is, the intake flow rate). The engine main body 1 includes a plurality of cylinders each with an intra-cylinder fuel injection valve 9. However, Fig. 1 shows only a single intra-cylinder fuel injection valve 9.

A terminal of the exhaust pipe 3 is connected to a muffler (not shown in the drawings). The exhaust is open to the air at an outlet of the muffler. An oxidation catalyst 6 and a particulate filter (DPF) 26 are arranged in series in this order from the upstream side.

The oxidation catalyst 6 allows unburned components such as HC and CO to react with O₂ to obtain CO, CO₂, H₂O, and the like. For example, Pt/CeO₂, Mn/CeO₂, Fe/CeO₂, Ni/CeO₂, or Cu/CeO₂ may be used as a catalyst material. The DPF 26 is configured to collect particulates (PM) such as soot in exhaust gas. The DPF 26 in the present embodiment carries a catalyst formed of rare metal and is a continuous recovery type that enables collected particulates to be continuously oxidized and combusted.

In addition to the oxidation catalyst 6 and the DPF 26, an NOx catalyst is preferably provided to purify NOx (nitrogen oxide) in the exhaust gas. Preferably, the NOx catalyst is arranged downstream of the DPF 26. In a spark ignited internal combustion engine (gasoline engine), a ternary catalyst is preferably provided in the exhaust passage. The oxidation catalyst 6, the DPF 26, the NOx catalyst, and the ternary catalyst correspond to an exhaust treatment device according to the present invention.

The NOx catalyst may be a NOx storage reduction (NSR) catalyst. In this case, the NOx catalyst functions to store NOx when inflow exhaust gas has a high concentration of oxygen and to reduce the stored NOx when the inflow exhaust gas a low concentration of oxygen and when a reduction component (for example, HC) is present. The NOx catalyst includes a base material formed of an oxide such as alumina Al₂O₃ and containing rare metal such as platinum Pt and an NOx absorption component both carried on the surface thereof; the rare metal serves as a catalytic component. The NOx absorption component is formed of at least one component selected from a group including, for example, alkali metal such as potassium K, sodium Na, lithium L, and cesium Cs, alkali earth such as barium Ba and calcium Ca, and rare earth such as lanthanum La and yttrium Y. Alternatively, the NOx catalyst may be a selective catalytic reduction (SOR) NOx catalyst.

A burner device 30 is arranged upstream of the oxidation catalyst 6 in the exhaust pipe 3. The burner device 30 includes a fuel addition valve 7, and a first glow plug 21 serving as first ignition means or a first ignition device. The burner device 30 also includes a burner catalyst 8 and an impact plate 20. The burner device 30 further includes a second glow plug 22 serving as second ignition means or a second ignition device.

The burner device 30 is arranged downstream of a junction of exhaust manifolds (not shown in the drawings) connected to the engine main body 1. A turbocharger may be provided downstream of the junction of the exhaust manifolds. In this case, the burner device 30 is provided downstream of the turbocharger and upstream of the oxidation catalyst 6.

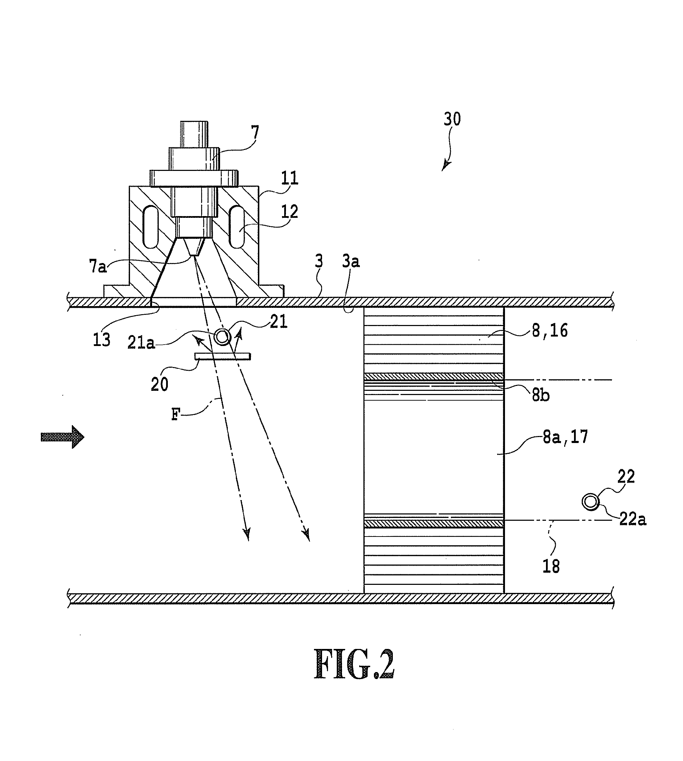

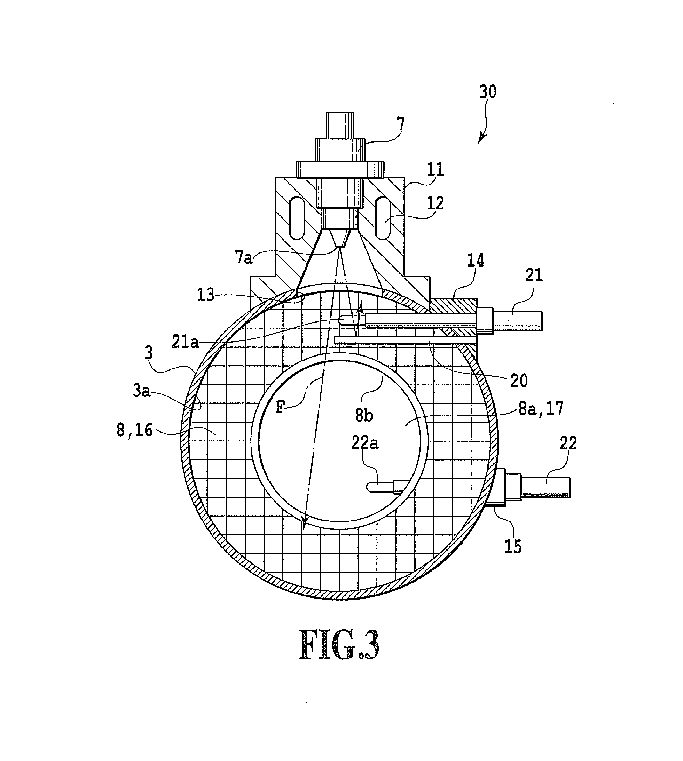

Fig. 2 and Fig. 3 show the configuration of the burner device 30 in detail. In Fig. 2, black arrows indicate the direction of flow of exhaust gas. The upstream side is hereinafter sometimes referred as "forward". The downstream side is hereinafter sometimes referred as "backward".

As shown in Fig. 2 and Fig. 3, the fuel addition valve 7 can add or inject liquid fuel (light oil) F into the exhaust pipe 3. The fuel addition valve 7 includes a single injection hole 7a. Alternatively, a plurality of injection holes may e formed.

The fuel addition valve 7 is fixed to a valve attachment boss 11 mounted on an outer surface portion of the exhaust pipe 3 by being inserted into the valve attachment boss 11 perpendicularly to the axial direction of the exhaust pipe 3. A cooling water passage 12 is defined inside the valve attachment boss 11 so that cooling water serving to cool fuel inside the fuel addition valve 7 flows through the cooling water passage 12. The exhaust pipe 3 includes a valve hole 13 formed therein and through which fuel injected through the fuel addition valve 7 is passed.

The first glow plug 21 is installed such that a first heating portion 21a provided at a leading end thereof is positioned slightly downstream of the fuel addition valve 7 and upstream of the burner catalyst 8. The first glow plug 21 is connected to a vehicle-mounted AC power source via a booster circuit (not shown in the drawings). When the first glow plug 21 is energized, the first heating portion 21a of the first glow plug 21 generates heat. The heat generated by the first heating portion 21a causes the fuel F added through the fuel addition valve 7 to be ignited to generate flames. Part of the added fuel comes into direct contact with the first heating portion 21a and is thus ignited. Available ignition means is another device such as a ceramic heater or a spark plug, particularly an electrical heating or spark ignition device.

The first glow plug 21 is fixed to the first plug attachment boss 14 mounted on the outer surface portion of the exhaust pipe 3, by being inserted from the side of the exhaust pipe 3 into the first plug attachment boss 14 perpendicularly to the axial direction of the exhaust plug 3 and the axial direction of the fuel addition valve 7. The first glow plug 21 projects into the exhaust pipe 3 through a hole in the exhaust pipe 3.

The burner catalyst 8 is provided downstream of the first glow plug 21 to oxidize and reform the fuel added through the fuel addition valve 7. The burner catalyst 8 may be an oxidation catalyst formed of, for example, a carrier made of zeolite and carrying rhodium or the like.

The fuel F supplied to the burner catalyst 8 is oxidized therein provided that the burner catalyst 8 has already been activated. The resulting oxidation reaction heat increases the temperature of the burner catalyst 8. This enables an increase in the temperature of exhaust gas passing the burner catalyst 8.

Furthermore, the increased temperature of the burner catalyst 8 causes hydrocarbon in the fuel having a large carbon number to be decomposed, resulting in very reactive hydrocarbon with a reduced carbon number. Thus, the fuel is reformed to have an improved reactivity.

In other words, the burner catalyst 8 forms a rapid heater that generates heat rapidly on one hand and forms a reformed fuel discharger that discharges the reformed fuel on the other hand.

The impact plate 20 is fixed by being inserted into the plug attachment boss 14 and projects into the exhaust pipe 3 through a hole in the exhaust pipe 3. The impact plate 20 may be formed of a material such as SUS which is excellent in heat resistance and impact resistance. The impact plate 20 in the present embodiment is rectangular. The impact plate 20 is arranged in proximity to and slightly below the first heating portion 21a. The first glow plug 21 and the impact plug 20 are inserted from the side of the upper part of the exhaust pipe 3 and extended parallel to each other and linearly in a horizontal direction.

As shown in Fig. 2 and Fig. 3, the fuel addition valve 7 injects the fuel F obliquely downward toward the first heating portion 21a and the impact plate 20 so as to allow the fuel F to flow slightly downstream. The injected fuel F has a predetermined angle of spray to form a conical fuel path. The first heating portion 21a and the impact plate 20 are arranged in the middle of the fuel path.

Part of the added fuel F impacts the first heating portion 21a and the impact plate 20. The remaining part of the fuel F passes by the first heating portion 21a and the impact plate 20. In particular, the impact plate 20, impacted by the fuel F, promotes atomization and spraying of the fuel, while feeding the fuel bouncing off the impact plate 20 to the first heating portion 21a. This in turn promotes the ignition of the first glow plug 21.

On the other hand, the fuel having passed by the first heating portion 21a and the impact plate 20 is combusted by the flames resulting from the ignition or introduced into the burner catalyst 8 for oxidation and reformation without being combusted.

Thus, the burner device 30 generates hot heating gas with flames. The heating gas is mixed with supplied exhaust gas to raise the exhaust temperature. The exhaust gas with the raised temperature is fed to the oxidation catalyst 6 and the DPF 26 to promote the warm-up and activation of thereof.

In the burner device 30 according to the present embodiment, a second glow plug 22 is further provided downstream of the burner catalyst 8. The second glow plug 22 is configured similarly to the first glow plug 21 and includes a second heating portion 22a at a leading end thereof. The second glow plug 22 is also fixed to a second plug attachment boss 15 mounted on the outer surface portion of the exhaust pipe 3, by being inserted from the side of the exhaust pipe 3 into the first plug attachment boss 14 perpendicularly to the axial direction of the exhaust plug 3 and the axial direction of the fuel addition valve 7. The second glow plug 22 projects into the exhaust pipe 3 through a hole in the exhaust pipe 3.

Now, the burner catalyst 8 will be described in further detail. The burner catalyst 8 is formed to occupy a part of the cross section of the exhaust passage. More specifically, the burner catalyst 8 is formed to contact the entire inner circumferential surface 3a of the exhaust pipe 3. The burner catalyst 8 includes one through-hole, that is, a center hole 8a, formed in a central portion thereof so as to penetrate the burner catalyst 8 in the axial direction of the exhaust pipe 3. Thus, the burner catalyst 8 is annularly formed and partitions the exhaust passage in the exhaust pipe 3 into intra-catalyst passages 16 formed inside the burner catalyst 8 and an extra-catalyst passage 17 formed outside the burner catalyst 8. The center hole 8a is defined by an inner pipe 8b fixed to an inner circumferential surface portion of the burner catalyst 8.

As shown in Fig. 3, the exhaust pipe 3 has a circular cross section. The burner catalyst 8 has an annular or donut-shaped cross section. The exhaust pipe 3 and the burner catalyst 8 are coaxially arranged. The burner catalyst 8 is what is called a straight flow type including a plurality of cells extending linearly from an upstream end to a downstream end. The individual cells form the intra-catalyst passages 16.

On the other hand, as seen in Fig. 1 and Fig. 2, the second glow plug 22 (particularly the second heating portion 22a) is positioned between the extra-catalyst passage 17 and the oxidation catalyst 6 in the axial direction of the exhaust pipe 3. In particular, the second glow plug 22 is positioned near an outlet of the extra-catalyst passage 17. Furthermore, the second glow plug 22 is positioned inside an extended area 18 obtained by extending the extra-catalyst passage 17 downstream along the axial direction of the exhaust pipe 3. Thus, the second heating portion 22a is positioned immediately behind the extra-catalyst passage 17 as seen from the upstream side as shown in Fig. 3.

As shown in Fig. 2 and Fig. 3, the first glow plug 21 is positioned almost at the same height as that of the uppermost portion of the burner catalyst 8. On the other hand, the second glow plug 22 is positioned almost at the same height as that of the lowermost portion of the center hole 8a.

As shown in Fig. 1, the engine main body 1 is provided with an electronic control unit (hereinafter referred to as an ECU) 10 configured to control various devices in accordance with the operation status of the engine main body 1, a driver's request, or the like. The ECU 10 includes a CPU configured to execute various arithmetic operations concerning engine control, a ROM in which programs and data required for the control are stored, a RAM in which the results of arithmetic operations by the CPU are temporarily stored, and an I/O port through which signals from an external device are input and through which signals are output to the external device.

The ECU 10 connects not only to the air flow meter 4 described above but also to various sensors via electric wiring; the sensors include a crank angle sensor 24 configured to detect the crank angle of the engine main body 1, an accelerator opening degree sensor 25 configured to output an electric signal corresponding to the opening degree of an accelerator, and a temperature sensor 27 configured to detect the temperature of the oxidation catalyst 6. Output signals from the sensors are input to the ECU 10. Furthermore, the ECU 10 connects to various devices via electric wiring; the devices include the intra-cylinder fuel injection valve 9, the fuel addition valve 7, the first glow plug 21, and the second glow plug 22. The devices are controlled by the ECU 10. The ECU 10 can detect the intake air amount based on an output value from the air flow meter 4 and detect an engine rotation speed based on an output value from the crank angle sensor 24. The ECU can further detect a demand load on the engine main body 1 based on an output value from the accelerator opening degree sensor 25.

In the present embodiment, when temperature increase control using the burner device 30 is performed, the ECU 10 appropriately activates the fuel addition valve 7, the first glow plug 21, and the second glow plug 22. That is, the ECU 10 appropriately drivingly opens (turns on) the fuel addition valve 7 to allow the fuel to be appropriately injected through the fuel addition valve 7. Furthermore, the ECU 10 appropriately energizes (turns on) the first glow plug 2 and the second glow plug 22 to achieve a sufficiently high temperature.

As described above, in the burner device, for example, inappropriate mixture of the added fuel and the exhaust gas (particularly the oxygen contained in the exhaust gas) may cause incomplete combustion or a misfire, resulting in a relatively large amount of soot. If no measures are taken against such soot, various problems may occur such as blockage of the exhaust treatment device, located downstream.

In particular, generated soot attaches to the inner circumferential surface of the exhaust pipe 3 to reduce the area of the exhaust passage. Furthermore, soot deposits early on the DPF 26, causing a recovery process for recovering the DPF 26 (for example, exhaust gas is made richer by allowing the fuel to be injected through the intra-cylinder fuel injection valve 9 or the fuel addition valve 7) to be frequently carried out. This increases fuel consumption. Moreover, the soot blocks the oxidation catalyst 6 and the DPF 26 to increase back pressure, thus reducing engine torque.

Thus, in the present embodiment adopts a configuration described below in order to suppress the amount of soot discharged from the burner device 30.

First, the first glow plug 21 is turned on to add the fuel through the fuel addition valve 7. Then, the added fuel is ignited by the first glow plug 21 to generate flames. The flames progress in the direction of flow of exhaust gas and pass through the uppermost portion of the burner catalyst 8 (intra-catalyst passages 16). Furthermore, the flames spread into the exhaust pipe 3 and then pass through the center hole 8a (extra-catalyst passage 17) and the whole inside of the burner catalyst 8 in the direction of flow of exhaust gas.

At this time, the flame passing through the center hole 8a is faster than that passing through the inside of the burner catalyst 8, and the former passes through the burner catalyst 8 faster than the latter, because pressure loss (resistance) is greater in the intra-catalyst passages 16 than in the extra-catalyst passage 17. This difference in speed causes the flames and the exhaust gas to be stirred and mixed immediately after the burner catalyst 8.

However, for example, inappropriate mixture of the added fuel and the exhaust gas (particularly the oxygen contained in the exhaust gas) at the position of the first glow plug 21 may cause insufficient ignition and flame generation in the first glow plug 21, leading to what is called incomplete combustion. Then, rather than the flames, exhaust gas with soot and unburned fuel mixed therein passes through the center hole 8a at a relatively high speed and a relatively high flow rate.

Thus, turning on the second glow plug 22 allows the exhaust gas with the soot and the unburned fuel mixed therein to be reignited and combusted. Then, the exhaust gas having passed through the inside of the burner catalyst 8 can be reignited and similarly combusted by the flames resulting from the combustion as well as the mixture based on the difference in speed.

Thus, even if the ignition and flame generation by the first glow plug 21 are insufficient, the second glow plug 22 enables re-ignition and re-combustion, allowing the amount of soot discharged from the burner device 30 to be suppressed. Furthermore, the adverse effect of soot on the oxidation catalyst 6, located downstream of the burner device 30, can be avoided. Moreover, the added fuel can be sufficiently combusted on the upstream side of the oxidation catalyst 6. Thus, the performance of the burner device 30 can be improved, promoting the capability of warming up the oxidation catalyst 6 and the like. Additionally, the amount of HC and CO discharged to the atmosphere can be suppressed.

In this aspect, the second glow plug 22 is suitably positioned near the outlet of the extra-catalyst passage 17. This is because the exhaust gas discharged from the extra-catalyst passage 17 can be immediately ignited. Furthermore, the second glow plug 22 is suitably positioned inside the extended area 18. This is because the exhaust gas discharged from the extra-catalyst passage 17 tends to flow through the extended area 18.

In the present embodiment, the second glow plug 22 is arranged opposite the first glow plug 21 across the center of the exhaust pipe 3 in a diametrical direction of the exhaust pipe 3. Thus, the second glow plug 22 can be arranged at a location where combustion is unlikely to occur and where soot is likely to be generated. Hence, the soot can be suitably reignited and combusted.

On the other hand, the present embodiment exerts the following effects. That is, when exhaust gas with soot and unburned fuel mixed therein flows through the center hole 8a at a higher flow rate than inside the burner catalyst, more soot is collected on the inner wall of the center hole 8a (that is, the inner circumferential surface of the inner pipe 8b) than inside the burner catalyst. However, the collected soot can be combusted by heat generated when the burner catalyst 8 becomes hot. The burner catalyst 8 is at a high temperature of at least 800°C when the burner device 30 is operated. Thus, when the burner catalyst 8 is at such a high temperature, the soot collected on the inner wall of the center hole 8a can be heated and combusted. Also in this regard, the amount of soot discharged from the burner device 30 can be suppressed.

When the burner catalyst 8 is at such a high temperature, the soot collected inside the burner catalyst 8 can be combusted by heat from the burner catalyst 8 itself.

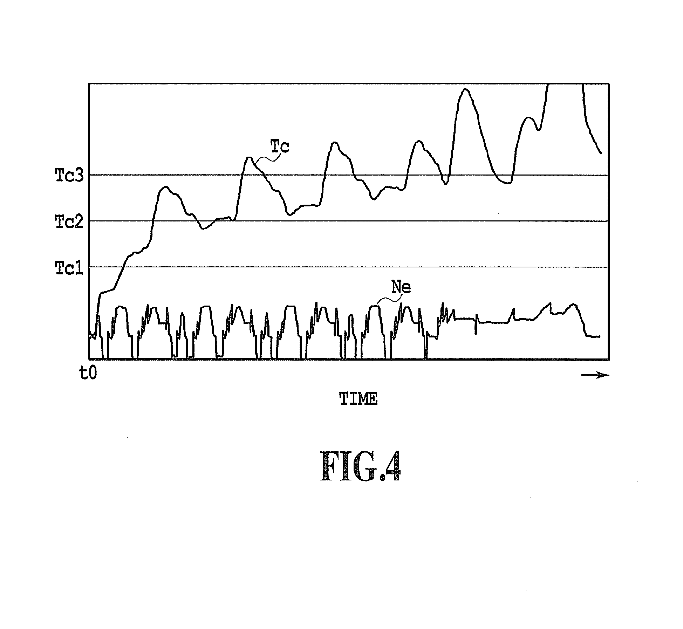

Now, control of the burner device 30 will be described. Fig. 4 illustrates variation in the temperature Tc of the oxidation catalyst 6 (floor temperature) and in engine rotation speed Ne which variation is observed since cold start of a vehicle with the engine mounted therein.

As shown in Fig. 4, as time elapses from t0 when the engine is started, the vehicle and the engine repeat acceleration and deceleration. The catalyst temperature Tc generally rises. At this time, before the oxidation catalyst 6 is activated, that is, before the oxidation catalyst 6 reaches an activating temperature, the burner device 30 is activated.

A basic prerequisite for activation of the burner device 30 is establishment of the conditions (1) and (2).
(1) The temperature Tc of the oxidation catalyst 6 is equal to or lower than a predetermined minimum activating temperature Tc3. For example, Tc3 = 200°C.
(2) The engine is carrying out deceleration fuel cut (F/C) or is operating idly.

In (2), the condition to be met is that the engine is deceleration fuel cut. This is because the exhaust gas supplied to the burner device 30 has a high concentration of oxygen (only air) and can thus be easily combusted and because at this time, the exhaust temperature is low, serving to lower the temperature Tc of the oxidation catalyst 6. Moreover, the flow rate of the exhaust gas is relatively low, making ignition relatively easy.

The other condition to be met is that the engine is operating idly. This is also because the exhaust gas supplied to the burner device 30 has a high concentration of oxygen and because the exhaust temperature is low, serving to lower the temperature Tc of the oxidation catalyst 6. Moreover, the flow rate of the exhaust gas is low, making ignition easy.

On the other hand, when the catalyst temperature T is equal to or lower than the minimum activating temperature Tc3, the amount of soot generated tends to increase with decreasing catalyst temperature Tc and to decrease with increasing catalyst temperature Tc.

Thus, in view of this tendency, when the catalyst temperature Tc is within a low temperature-side predetermined first temperature range Tc1 <Tc ≤ Tc2, the fuel addition valve 7, the first glow plug 21, and the second glow plug 22 are turned on, that is, activated. Thus, the added fuel is positively ignited and combusted by the first glow plug 21, with the resultant soot combusted by the second glow plug 22. For example, Tc1 = 100°C and Tc2 = 150°C.

On the other hand, when the catalyst temperature Tc is within a high temperature-side predetermined second temperature range Tc2 ≤ Tc ≤ Tc3, the fuel addition valve 7 and the second glow plug 22 are turned on, that is, activated, while the first glow plug 21 is inactivated. Thus, the added fuel is utilized rather for reformation in the burner catalyst 8. The added fuel is then fully oxidized and combusted by the oxidation catalyst 6, having a larger capacity than the burner catalyst 8. Furthermore, the added fuel is ignited only by the second glow plug 22.

When the catalyst temperature Tc is lower than the first temperature range Tc1 ≤ Tc ≤ Tc2, the fuel addition valve 7, the first glow plug 21, and the second glow plug 22 are all turned off. This is because at this time, no satisfactory results are obtained by activating the burner device 30.

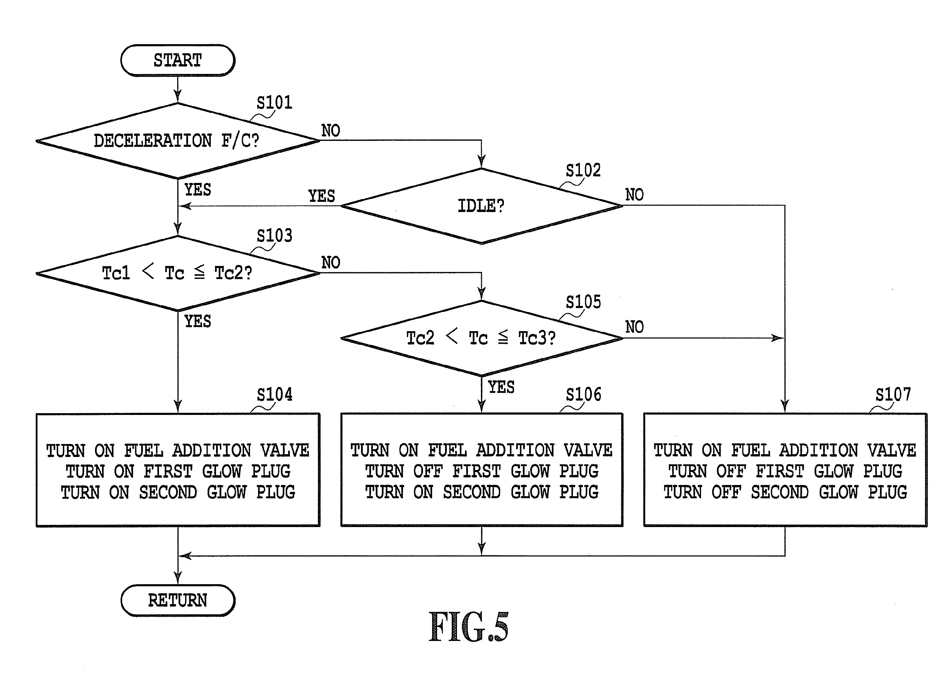

Fig. 5 illustrates a flowchart of a routine for the control of the burner device 30. The routine is repeatedly carried out by the ECU 10 for every predetermined arithmetic period (for example, every 16 msec).

First, in step S101, the ECU 10 determines whether or not the engine is carrying out deceleration fuel cut (F/C). For example, the ECU 10 determines that the engine is carrying out deceleration fuel cut, for example, when 1) an accelerator opening degree Ac detected by the accelerator opening degree sensor 25 is indicative of a substantially fully open state and when 2) an engine rotation speed Ne calculated based on an output from the crank angle sensor 24 is slightly greater than a predetermined target idle rotation speed. If the result of the determination is Yes, the ECU 10 proceeds to step S103.

On the other hand, if the result of the determination is No, the ECU 10 proceeds to S102 to determine whether or not the engine is operating idly. If the result of the determination is Yes, the ECU 10 proceeds to step S103. If the result of the determination is No, the ECU 10 proceeds to step S107.

In step S103, the ECU 10 determines whether or not the temperature Tc of the oxidation catalyst 6 detected by the temperature sensor 27 is within the low temperature-side first temperature range Tc1 < Tc ≤ Tc2. If the result of the determination is Yes, the ECU proceeds to step S104 to turn on all of the fuel addition valve 7, the first glow plug 21, and the second glow plug 22. Thus, the routine is ended.

On the other hand, if the result of the determination is No, the ECU 10 proceeds to step S105 to determine whether or not the detected catalyst temperature Tc is within the high temperature-side second temperature range Tc2 < Tc ≤ Tc3. If the result of the determination is Yes, the ECU proceeds to step S106 to turn on the fuel addition valve 7 and the second glow plug 22, while turning off the first glow plug 21. Thus, the routine is ended.

On the other hand, if the result of the determination is No, the ECU 10 proceeds to step S107 to turn off all of the fuel addition valve 7, the first glow plug 21, and the second glow plug 22. That is, the burner device 30 is inactivated. Thus, the routine is ended.

Now, another embodiment will be described. The same components of the present embodiment as those of the above-described embodiment (hereinafter referred to as the basic embodiment) are denoted by the same reference numerals and will not be described below. Mainly differences from the basic embodiment will be described below.

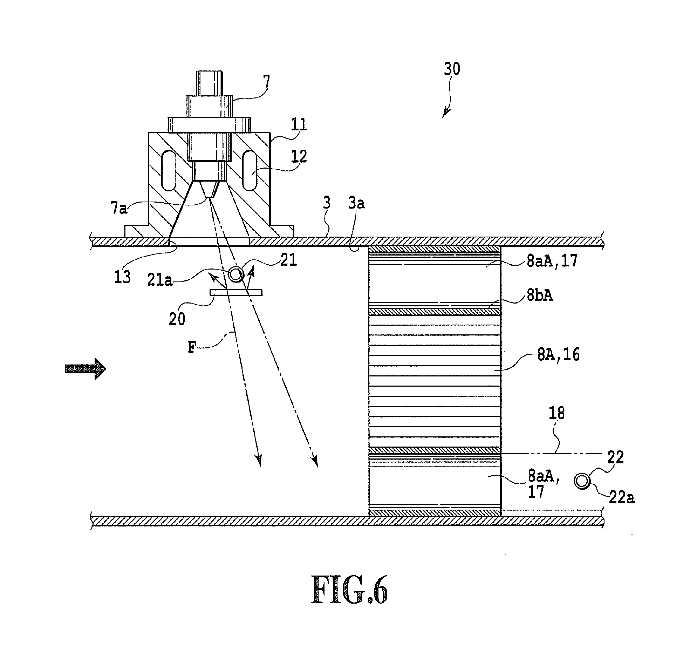

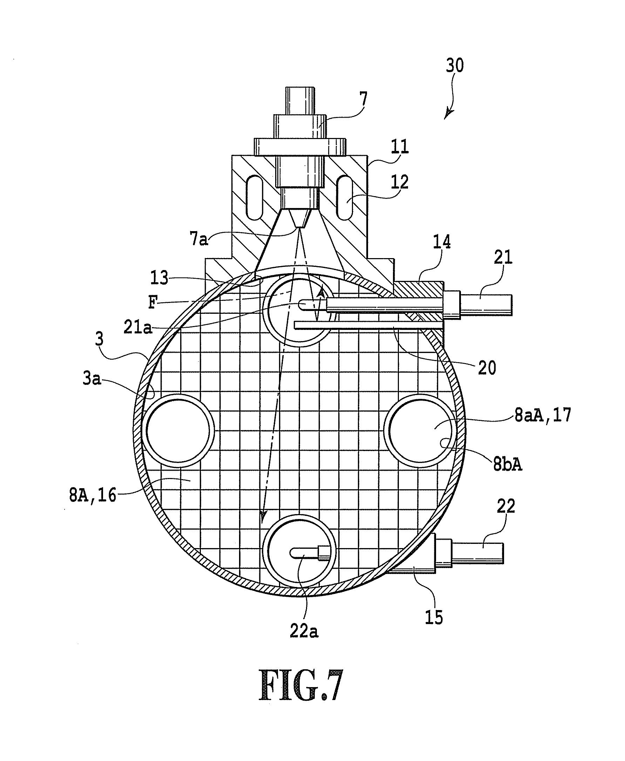

Fig. 6 and Fig. 7 show a first modification. The first modification is different from the basic embodiment only in the configuration of the burner catalyst and the arrangement of the second glow plug.

A burner catalyst 8A is formed to occupy a part of the cross section of the exhaust passage. More specifically, the burner catalyst 8A is formed to contact the entire inner circumferential surface 3a of the exhaust pipe 3. The burner catalyst 8A includes a plurality of through-holes penetrating the burner catalyst 8A in the axial direction of the exhaust pipe 3, that is, a plurality of outer circumferential holes 8aA at the respective plural positions. Thus, the burner catalyst 8A is partitioned into the intra-catalyst passages 16 formed inside the burner catalyst 8A and the extra-catalyst passages 17 formed outside the burner catalyst 8A.

Four outer circumferential holes 8aA are formed on the outer circumferential side of the burner catalyst 8A at equal intervals in a circumferential direction. The outer circumferential holes 8aA are positioned at a right position, a left position, a top position, and a bottom position, respectively, in the burner catalyst 8 as seen in a front view shown in Fig. 7. Each of the outer circumferential holes 8aA is defined by an inner pipe 8bA fixed to the burner catalyst 8A so as to form an extra-catalyst passage 17. As shown in Fig. 7, the outer circumferential hole 8aA at the top position is located immediately below the heating portion 21a of the first glow plug 21.

On the other hand, the second glow plug 22 is arranged such that the second heating portion 22a thereof is located immediately below the outer circumferential hole 8aA at the bottom position. Thus, the second glow plug 22 (particularly the second heating portion 22a thereof) is positioned between the oxidation catalyst 6 and the extra-catalyst passages 17 in the axial direction of the exhaust pipe 3 and near the outlet of the extra-catalyst passage 17 formed of the bottom outer circumferential hole 8aA. The second glow plug 22 is further positioned inside the extended area 18 obtained by extending the extra-catalyst passages 17 downstream along the axial direction of the exhaust pipe 3. Furthermore, the second glow plug 22 is arranged opposite the first glow plug 21 across the center of the exhaust pipe 3 in the diametrical direction of the exhaust pipe 3.

The effects and control method of the first modification are similar to those of the basic embodiment. Thus, the first modification can suitably suppress the amount of soot discharged from the burner device 30.

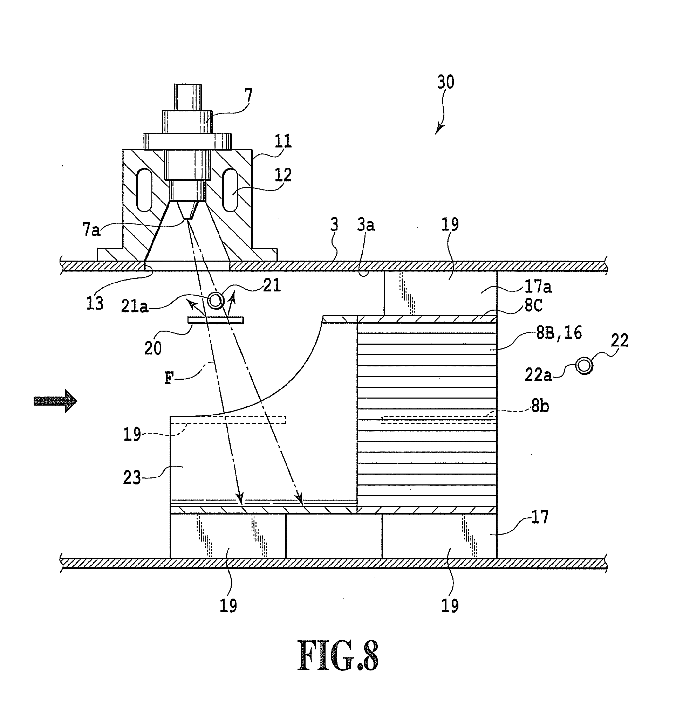

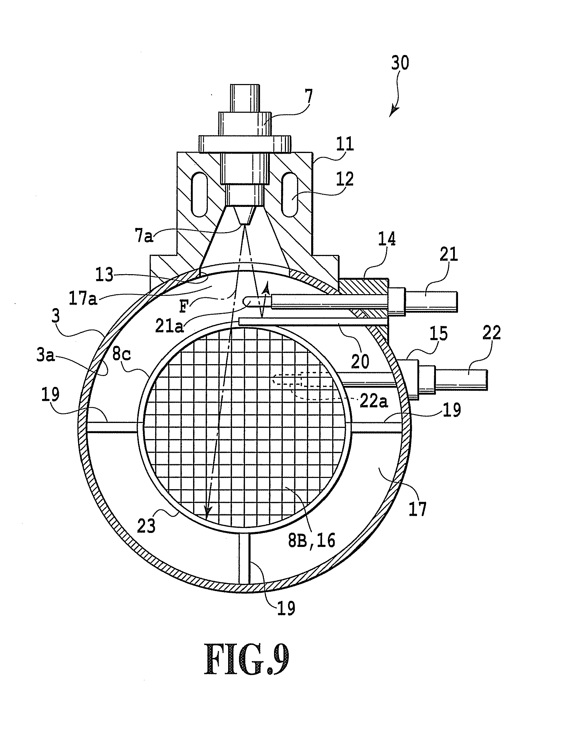

Fig. 8 and Fig. 9 show a second modification. The second modification is also different from the basic embodiment only in the configuration of the burner catalyst and the arrangement of the second glow plug.

A burner catalyst 8B is configured to form a double pipe with the exhaust pipe 3. The burner catalyst 8B has a diameter smaller than the inner diameter of the exhaust pipe 3. The burner catalyst 8B is coaxially arranged in the exhaust pipe 3. Thus, the burner catalyst 8B is positioned away from the inner circumferential surface 3a of the exhaust pipe 3. The annular extra-catalyst passage 17 is formed radially outside the burner catalyst 8B. A cylindrical casing 8c is fixed on the outer circumferential surface portion of the burner catalyst 8B. The casing 8c is supported in the exhaust pipe 3 by a plurality of radially arranged stays 19.

The burner catalyst 8B includes an approach plate 23 projecting upstream. The approach plate 23 is mounted on the lower half of a front end of the casing 8c. The approach plate 23 projects upstream from the casing 8c and is thus formed like a gutter with a semicircular cross section. Like the casing 8c, the approach plate 23 is supported in the exhaust pipe 3 by the plurality of radially arranged stays 19. The approach plate 23 receives the added fuel F having passed by the first glow plug 21 and the impact plate 20. The approach plate 23 then introduces and guides the added fuel F into the burner catalyst 8B, while utilizing the flow of exhaust gas.

The first heating portion 21a of the first glow plug 21 is positioned in front of the extra-catalyst passage 17 positioned over the uppermost portion of the burner catalyst 8B (this extra-catalyst passage 17 is hereinafter referred to as the uppermost extra-catalyst passage 17a). On the other hand, the second heating portion 22a of the second glow plug 22 is positioned immediately below the upper half of the burner catalyst 8B. That is, the second heating portion 22a of the second glow plug 22 is positioned on the same side as that of the first glow plug 21 in the diametrical direction of the exhaust pipe 3 and with respect to the center of the exhaust pipe 3. Thus, the second glow plug 22 (particularly the second heating portion 22a thereof) is positioned between the oxidation catalyst 6 and the extra-catalyst passages 17 in the axial direction of the exhaust pipe 3 and near the outlet of the uppermost extra-catalyst passage 17a.

The effects and control method of the second modification are similar to those of the basic embodiment. In particular, this configuration allows flames resulting from ignition of the first glow plug 21 to flow most positively through the uppermost extra-catalyst passage 17a. During incomplete combustion, soot also flows most positively through the uppermost extra-catalyst passage 17a. On the other hand, the second heating portion 22a of the second glow plug 22 is positioned near the outlet of the uppermost extra-catalyst passage 17a and immediately behind the burner catalyst 8B. Hence, soot exiting the uppermost extra-catalyst passage 17a can be positively combusted by the second glow plug 22, also utilizing reformed fuel exiting the burner catalyst 8B. Thus, the amount of soot from the burner device 30 can be suitably suppressed.

In the second modification, the position of the second glow plug 22 may be changed such that the second glow plug 22 is located higher with the second heating portion 22a positioned immediately below the uppermost extra-catalyst passage 17a. In this and any other case, the second heating portion 22a of the second glow plug 22 may be positioned inside the extended area 18 obtained by extending the extra-catalyst passages 17 downstream along the axial direction of the exhaust pipe 3.

The preferred embodiments of the present invention have been described in detail. However, in the present invention, various other embodiments are possible. For example, in the above-described embodiments, the temperature of the oxidation catalyst 6 serving as an exhaust treatment device is detected directly by the temperature sensor 27. However, the ECU 10 may estimate the temperature of the oxidation catalyst 6 based on the engine operation status. The detection and the estimation are collectively referred to as the "acquisition". The above-described numerical values, shapes, and the like are illustrative and may be optionally changed. For example, at least one of the burner catalyst and the exhaust pipe may be noncircular, for example, elliptical or oval in cross section. The types and arrangement sequence of the exhaust treatment devices present downstream of the burner device are optional. The application, form, and the like of the internal combustion engine are also optional. The internal combustion engine is not limited to the vehicle mounted type or the like.

The present invention has been described specifically to some degree. However, it should be appreciated that various alterations and changes may be made to the present invention without departing from the spirit and scope of the claimed invention. The embodiments of the present invention are not limited to those described above but include any modifications and applications embraced by the concepts of the present invention defined by the claims thereof. Thus, the present invention should not be interpreted in a limited manner but is applicable to any other technique belonging to the scope of the concepts of the present invention.

## Claims

1. An internal combustion engine comprising an exhaust treatment device provided in an exhaust passage and a burner device provided upstream of the exhaust treatment device to raise exhaust temperature, the internal combustion engine being **characterized in that**:
the burner device includes a fuel addition valve configured to add fuel into the exhaust passage, first ignition means for igniting the fuel added through the fuel addition valve, a burner catalyst provided downstream of the first ignition means, and second ignition means provided downstream of the burner catalyst,
the burner catalyst is formed to occupy a part of a cross section of the exhaust passage, thus partitioning the exhaust passage into an intra-catalyst passage formed inside the burner catalyst and an extra-catalyst passage formed outside the burner catalyst, and
the second ignition means is positioned between the extra-catalyst passage and the exhaust treatment device in an axial direction of the exhaust passage.

2. The internal combustion engine according to Claim 1, **characterized in that** the second ignition means is positioned near an outlet of the extra-catalyst passage.

3. The internal combustion engine according to Claim 1 or 2, **characterized in that** the second ignition means is positioned inside an extended area obtained by extending the extra-catalyst passage downstream along the axial direction of the exhaust passage.

4. The internal combustion engine according to any one of Claims 1 to 3, **characterized in that** the burner catalyst is formed to contact an inner circumferential surface of the exhaust passage and includes at least one through-hole penetrating the burner catalyst in the axial direction of the exhaust passage, and the through-hole forms the extra-catalyst passage.

5. The internal combustion engine according to Claim 4, **characterized in that** the at least one through-hole is formed in a central portion of the burner catalyst, and the burner device is thus annularly formed.

6. The internal combustion engine according to Claim 4, **characterized in that** a plurality of the through-holes are formed at respective predetermined positions of the burner catalyst.

7. The internal combustion engine according to any one of Claims 1 to 3, **characterized in that** the burner catalyst is positioned at a distance from the inner circumferential surface of the exhaust passage, and the annular extra-catalyst passage is formed radially outside the burner catalyst.

8. The internal combustion engine according to any one of Claims 1 to 7, **characterized by** comprising:
acquisition means for acquiring a temperature of the exhaust processing device; and
control means for controlling the fuel addition valve, the first ignition means, and the second ignition means based on the temperature acquired by the acquisition means, and
in that the control means activates the fuel addition valve, the first ignition means, and the second ignition means when the acquired temperature is within a predetermined first temperature range, and activates the fuel addition valve and the second ignition means while inactivating the first ignition means when the acquired temperature is within a predetermined second temperature range higher than the first temperature range.

9. The internal combustion engine according to any one of Claims 1 to 8, **characterized in that** the exhaust treatment device comprises an oxidation catalyst.
